# EUROPÄISCHE PATENTSCHRIFT

(11) **EP 2 907 181 B1**
(45) Veröffentlichungstag und Bekanntmachung des Hinweises auf die Patenterteilung: **30.11.2016**
(21) Anmeldenummer: 13773775.5
(22) Anmeldetag: 08.10.2013
(51) Int. Cl.: H01M 4/36, H01M 4/62, H01M 4/58, H01M 4/04, H01M 10/052

(54) **KOMPOSIT AUS PORÖSEM KOHLENSTOFF UND SCHWEFEL-HALTIGEM AKTIVMATERIAL SOWIE VERFAHREN FÜR DESSEN HERSTELLUNG**
COMPOSITE MADE OF POROUS CARBON AND SULPHUR-CONTAINING ACTIVE MATERIAL AS WELL AS METHOD FOR PRODUCING SAME
COMPOSITE À BASE DE CARBONE POREUX ET D'UN MATÉRIAU ACTIF CONTENANT DU SOUFRE, ET PROCÉDÉ POUR LE PRODUIRE

(30) Priorität: 11.10.2012 DE 102012109720
(43) Veröffentlichungstag der Anmeldung: 19.08.2015
(73) Patentinhaber: Heraeus Quarzglas GmbH & Co. KG, 63450 Hanau (DE)
(72) Erfinder: OTTER, Matthias, 48155 Münster (DE); BECKER, Jörg, 61194 Niddatal (DE); PIHAN, Sascha, 63743 Aschaffenburg (DE); NEUMANN, Christian, 35410 Hungen (DE)
(74) Vertreter: Staudt, Armin Walter
(86) Internationale Anmeldenummer: PCT/EP2013/070902
(87) Internationale Veröffentlichungsnummer: WO 2014/056884

(56) Entgegenhaltungen:
- WO-A2-2012/064702
- DE-B3-102011 016 468
- US-A1- 2011 052 998

## Beschreibung

Die vorliegende Erfindung betrifft ein Komposit aus porösem Kohlenstoff und Schwefel-haltigem Aktivmaterial, mit einer porösen Kohlenstoffstruktur, die eine Außenoberfläche und über Porenkanäle von der Außenoberfläche aus zugängliche und miteinander verbundene Kavitäten aufweist, die von Innenwandungen begrenzt sind. Weiterhin betrifft die Erfindung ein Verfahren für die Herstellung eines derartigen Komposits aus porösem Kohlenstoff und Schwefel-haltigem Aktivmaterial. Im Zuge der Entwicklung mobiler Energiespeicher steigt die Nachfrage nach wiederaufladbaren Batterien ("Akkumulatoren" oder "Sekundärbatterien"). Grundlegende Anforderung ist dabei eine hohe gravimetrische Energiedichte. Insbesondere für kommerzielle Anwendungen sollen die Elektrodenmaterialien preiswert, nicht toxisch, nicht explosiv und leicht zu verarbeiten sein.

### Stand der Technik

Weit verbreitet sind Lithium-Sekundärbatterien. Bei diesen sind eine Kathode (positive Elektrode) und eine Anode (negative Elektrode) aus einem Material vorgesehen, das zur Einlagerung und Auslagerung (Interkalation und Deinterkalation) von Lithiumionen geeignet ist, und das an einen Elektrolyten angrenzt, der die Bewegung der Lithiumionen zulässt. Als Anodenmaterial sind Kohlenstoffstrukturen im Einsatz, die Lithiumionen reversibel aufnehmen und abgeben können, ohne dass sich seine strukturellen und elektrischen Eigenschaften wesentlich ändern. Die Kathode der Lithium-Sekundärbatterien besteht hauptsächlich aus komplexem Oxid von Lithium und einem Übergangsmetall, wie etwa Lithiumcobaltoxid (LiCoO₂) Die theoretische Zellspannung liegt um 3,7 V und die Energiedichte bei hohem Wirkungsgrad (um 90%) je nach Typ im Bereich von 120 bis 210 Wh/kg. Die theoretische maximale Kapazität ist auf etwa 300 mAh/g beschränkt. Lithium-Schwefel-Sekundärbatterien sind in der Entwicklung und gelten als eine der viel versprechenden Sekundärbatterien der nächsten Generation. In Ihrer ein-fachsten Konfiguration besteht die Zelle aus einer positiven Elektrode aus Schwefel und einer negativen Elektrode aus Lithium. Die theoretische Kapazität beträgt 1.650 mAh pro g Schwefel (unter der Annahme, dass alle Schwefelatome bei der Entladung einer Elektrode vollständig zu S2- reduziert werden), die Nennspannung liegt bei 2,2 V/Zelle und sie hat potenziell eine der höchsten Energiedichten aller Akkumulatoren überhaupt, nämlich um 2500 Wh/kg. Der in der Praxis bisher erzielbare Wirkungsgrad liegt jedoch deutlich darunter.

Die an der Reaktion beteiligte Komponente Schwefel (oder schwefelhaltige organische Verbindungen) wirkt als elektrischer Isolator, so dass der Ablauf einer elektrochemischen Reaktion einen andauernden innigen Kontakt mit einer elektrisch gut leitfähigen Komponente - wie etwa Kohlenstoff - erfordert.

Um die ionische Leitung der schwefelhaltigen Elektrode zu gewährleisten, werden flüssige Elektrolyte - häufig polare organische Lösungsmittel - eingesetzt. Diese dienen nicht nur als Ionentransportmedien zwischen Anode und Kathode, sondern auch als Ionenleiter innerhalb der schwefelhaltigen Elektrode. Dadurch ergibt sich einerseits die Problematik, dass die Elektrodenstruktur einen ungehinderten Zutritt des Elektrolyten ermöglichen soll. Zum anderen können sich Sulfid- und Polysulfid-Entladeprodukte wie Li₂S₂ oder Li₂S in dem Elektrolyten lösen und von diesem ausgetragen werden. Dies gilt insbesondere dann, wenn große Reservoirs des Elektrolyten zur Verfügung stehen. Die von der Positivelektrode wegdiffundierten Schwefelkomponenten sind für die weitere elektrochemische Reaktion nicht mehr verfügbar, wodurch die Ladekapazität sinkt. Es ist auch möglich, dass Entladungsprodukte irreversibel aus der Elektrolytlösung ausfallen, wodurch die Ladekapazität ebenfalls sinkt.

Zur Verringerung dieser nachteiligen Effekte wird in der US 2009/0311604 A1 vorgeschlagen, das Wegdiffundieren der Schwefelbeladung aus der Kathode zu minimieren, indem als Gerüstmaterial für die Kathode eine poröse Kohlenstoffmatrix mit Nanoporen bereitgestellt wird, in denen die Schwefelbeladung absorbiert ist. Die Nanoporosität kann zwischen 10 und 99 % des Elektrodenmaterials ausmachen, wobei die Schwefelbeladung das Porenvolumen nicht vollständig ausfüllt, um ein Teilvolumen für den Zu- und Abfluss des flüssigen Elektrolyten freizulassen.

In die Nanoporen der Kohlenstoffmatrix wird Schwefelschmelze einfiltriert. Die Poren sind über Nanokanäle miteinander verbunden, welche die Mobilität des eingelagerten Schwefels sowie von Schwefel-Lithiumverbindungen, die sich beim Entladen in dem Elektrolyten lösen, begrenzen können. Diese verbleiben dadurch in unmittelbarer Nähe der Kohlenstoffmatrix und damit in Kontakt zum elektrischen Leiter, so dass über diesen die Umkehrung der elektrochemischen Reaktion beim Aufladen des Akkumulators ermöglicht wird. Als geeignete Ausgangskomponenten für die Kohlenstoffmatrix werden Aerogele, Xerogele und Molekularsiebe genannt.

Eine Weiterentwicklung dieser Methode ist aus einer Publikation von Xiulei Ji, Kyu Tae Lee, Linda F. Nazar "A highly ordered nanostructured carbon-sulphur cathode for lithium-sulphur batteries" in Nature Materials 8, 500 - 506 (2009) bekannt. Dabei wird als Kohlenstoffmatrix ein unter der Bezeichnung "CMK-3" bekanntes, mesoporenhaltiges Kohlenstofferzeugnis eingesetzt, das eine geordnete Porenstruktur mit einheitlicher Porengröße und großem Porenvolumen aufweist. Dieses Kohlenstofferzeugnis wird mittels eines so genannten "Harttemplatverfahrens" erzeugt. Als Harttemplat wird "SBA-15" (abgeleitet von: "Santa Barbara Amorphous type material" (University of California)) eingesetzt, ein Siliziumdioxid-Erzeugnis mit periodischer und einstellbarer Anordnung von Mesoporen und sehr hoher spezifischer Oberfläche. Auf diese Weise wird eine geordnete Kohlenstoffstruktur erhalten, bei der parallel und in hexagonaler Anordnung verlaufende 6,5 nm dicke Kohlenstoff-Nanoröhrchen über 3-4 nm weite Kanäle voneinander getrennt sind. Die Kohlenstoff-Nanoröhrchen sind mittels Kohlenstoff-Mikrofasern, die die Kanäle überspannen, miteinander verstrebt, so dass ein Kollabieren der Struktur verhindert wird. Diese Kohlenstoffstruktur wird mit schmelzflüssigem Schwefel infiltriert, wobei der Schwefel durch Kapillarkräfte in die Kanäle eingezogen wird und nach dem Abkühlen Schwefel-Nanofasern mit Durchmessern um 3 nm bildet, die in innigem Kontakt mit der Kohlenstoffstruktur stehen.

Ein ähnliches Verfahren zur Herstellung von Kohlenstoff-Schwefel-Kompositpulvers ist auch beschrieben im Paper "Porous carbon-sulfur composite cathode for lithium/sulfur cells" von Mumin Rao et al., veröfffentlicht am 12.01.2012 in: Electrochemistry Communications 17 (2012), Seiten 1-5. Dabei wird eine wasserlösliche schwefelhaltige Verbindung in Wasser gelöst und die Lösung mit Kohlenstoffpulver versetzt. Durch tropfenweises Titrieren in Ameisensäure wird ein Präzipitat erzeugt, das Kohlenstoffpartikel in Verbindung mit ausgefällten Schwefel-Nanopartikeln enthält. Dieser Feststoff wird gereinigt und getrocknet. Anschließend wird er 12 h lang auf 160 °C unter einem Ar-Gasstrom erhitzt. Dadurch wird der Schwefel flüssig, so dass er besser in die Mikroporen der Kohlenstoffpartikel eindringt, wobei gleichzeitig überflüssiger Schwefel von den Außenoberflächen der Kohlenstoffpartikel abdampfen soll. Der Schwefelanteil vermindert sich infolge dieser thermischen Behandlung von 69,8 Gew.-% auf 53,7 Gew.-%.

Mittels Templatverfahren erzeugte, poröse Kohlenstoffstrukturen in ungeordneter und in geordneter Form sowie Verfahren für deren Herstellung sind auch beschrieben in der DE 10 2011 013 075 beziehungsweise im Paper "Ordered Mesoporous Carbons" von Ryong Ryoo et al., veröffentlicht in Adv. Mater. 2001, 13 (9), S. 677-681 Weiterhin offenbart US2011/0052998 ein Verfahren für die Herstellung eines Komposits aus porösem Kohlenstoff und Schwefel als Aktivmaterial.

### Technische Aufgabenstellung

Das Verfahren ist aufwändig und teuer. Darüber hinaus zeigt es sich, dass die Schmelzinfiltration von Schwefel in eine Matrix von porösem Kohlenstoff stark von der Oberflächenpolarität des verwendeten Kohlenstoffs abhängt und dass abstoßende Wechselwirkungen zwischen dem eher hydrophilen Kohlenstoff und der hydrophoben Schwefelschmelze die Infiltration behindern.

Erschwerend trägt die Eigenschaft von schmelzflüssigem Schwefel bei, zu Polymerisation zu neigen. Polymerisate können die engen Porenkanäle und damit die Zugänge zu den Poren leicht verstopfen und damit zu belegungsfreiem Totvolumen innerhalb der Poren führen.

Demzufolge wird mittels der bekannten Methoden eine Kohlenstoffstruktur mit inhomogener Schwefelbeladung erhalten, bei der die Konzentration des Schwefels auf den von außen leicht zugänglichen freien Oberflächen wesentlich höher ist, als auf den Oberflächen an der Innenwandung der Poren.

Um eine hohe Ladekapazität der Schwefelelektrode zu erreichen, ist daher nicht nur das Bereitstellen einer Kohlenstoffstruktur mit optimaler, das heißt möglichst hierarchischer Porenverteilung erforderlich, sondern auch eine optimale Verteilung des Schwefels in den Poren.

Außerdem treten in der Schwefel-Elektrode beim Aufladevorgang Polysulfide auf, die im Elektrolyten löslich sind, was die Rückhaltung innerhalb der porösen Kohlenstoff-Elektrodenstruktur erschwert.

Der Erfindung liegt daher die Aufgabe zugrunde, ein Komposit aus einer porösen Kohlenstoffstruktur und Schwefel anzugeben, das sich beim Einsatz als Elektrodenmaterial für eine Lithium-Schwefel-Sekundärbatterie durch hohe Kapazität und einen geringen Kapazitätsverlust auszeichnet.

Außerdem liegt der Erfindung die Aufgabe zugrunde, ein Verfahren anzugeben, das eine kostengünstige Herstellung eines derartigen Kompositpulvers ermöglicht.

### Allgemeine Beschreibung der Erfindung

Diese Aufgabe wird erfindungsgemäß durch ein Verfahren gelöst, das folgende Verfahrensschritte umfasst:
(a) Bereitstellen von Pulver aus porösem Kohlenstoff,
(b) Herstellen einer Dispersion aus dem Kohlenstoff-Pulver, dem Schwefelhaltigen Aktivmaterial und einem wässrigen Medium,
(c) Hydrothermale Behandlung der Dispersion bei einer Temperatur, die zum Aufschmelzen von Schwefel ausreicht, unter Bildung einer Flüssigphase, die Schwefelschmelze und Wasser enthält, und Infiltrieren von Poren des porösen Kohlenstoffs mit der Flüssigphase,
(d) Entfernen des Wassers und Isolieren des Komposits.

Es wird eine Dispersion erzeugt, bei der in einem wässrigen Medium, wie Wasser, Säure oder Lauge mit etwaigen Zusatzstoffen, partikelförmiger Feststoff möglichst homogen verteilt ist. Der Feststoff umfasst Pulver aus porösem Kohlenstoff und Aktivmaterial. Das Aktivmaterial enthält Schwefel oder eine schmelzbare Schwefelverbindung. Die Dispersion wird einer hydrothermalen Behandlung unterzogen. Diese erfolgt unter Druck und erhöhter Temperatur in einem druckfesten Behälter, wie etwa einem Autoklaven. Beim Erhitzen verdampft ein Teil des Wassers und übt einen Druck innerhalb des Behälters aus.

Für die vorliegende Erfindung wesentlich ist das Vorliegen einer Flüssigphase, die eine unabhängige Schwefelphase in einer flüssigen Wasserphase bei hoher Temperatur oberhalb von 100 °C und hohem Druck enthält.

Daher ist die Temperatur bei der hydrothermalen Behandlung einerseits hoch genug, um Schwefel oder die Schwefelverbindung aufzuschmelzen. Schwefel kommt in mehreren Modifikationen vor. Im thermodynamischen Gleichgewicht liegt die minimale Schmelztemperatur bei 119,6 °C (für reinen β-Schwefel mit monokliner Kristallstruktur bei einem Druck von 0,018 mbar); in rhomboedrischer Kristallstruktur (α-Schwefel) kann die Schmelze bei Normaldruck kinetisch bedingt auch bereits bei niedrigerer Temperatur einsetzen; in der Literatur werden für den Schmelzpunkt für Schwefel häufig Temperaturwerte um 115 °C genannt.

Damit Wasser in flüssiger Form in der Flüssigphase verbleiben kann, liegt die Temperatur bei der hydrothermalen Behandlung andererseits unterhalb des sogenannten "kritischen Punktes". Im thermodynamischen Gleichgewicht liegt dieser Punkt bei einer Temperatur von 374,12 °C und bei einem Druck von 221,2 MPa.

Diese Ortung der Eckpunkte von Temperatur und Druck der hydrothermalen Behandlung ergibt sich bei rein thermodynamischer Betrachtung. Bei Berücksichtigung kinetischer Aspekte können sich davon abweichende Grenzwerte für Temperatur und Druck ergeben.

Durch Erhitzen von Wasser unter Druck auf Temperaturen oberhalb von 100 °C ändern sich dessen Eigenschaften. Unter hydrothermalen Bedingungen entfaltet das Wassermolekül eine höhere Nukleophilie, was die sonst in der Wasserchemie bekannten Anlagerungs- und Hydratisierungsreaktionen verändert. So hat es sich gezeigt, dass durch die hydrothermale Verfahrensführung das unterkritische flüssige Wasser als Netzmittel dient, indem es die Abstoßung zwischen der hydrophilen Kohlenstoffoberfläche und der hydrophoben Schwefelschmelze verringert. Darüber hinaus wird die Löslichkeit von Schwefel in der wässrigen Phase wesentlich erhöht, was darauf zurückgeführt werden kann, dass neben cyclo-Oktaschwefel auch Polysulfide entstehen.

Diese Effekte können das Eindringen der Flüssigphase in die Poren der porösen Kohlenstoffstruktur erleichtern und das Auftreten von Verstopfungen vermindern, die etwa durch Schwefel-Polymerisat verursacht werden können. Es ergibt sich jedenfalls im Vergleich zu der aus dem Stand der Technik üblichen Schmelzinfiltration des Schwefels eine merklich homogenere Verteilung des Schwefel-haltigen Aktivmaterials in den Poren der Kohlenstoff-Partikel.

Nach Abschluss der hydrothermalen Behandlung wird eine Dispersion aus dem wässrigen Medium, und Kohlenstoff-Schwefel-Pulverteilchen erhalten. Diese werden anhand üblicher Methoden separiert, so dass ein Kompositpulver aus porösem Kohlenstoff und darin homogen und in großer Menge eingelagertem Aktivmaterial erhalten wird.

Das erfindungsgemäße Verfahren stellt somit eine kostengünstige Maßnahme dar, die ein homogenes Infiltrieren von porösem Kohlenstoff mit Schwefel enthaltendem Aktivmaterial ermöglicht und das die oben beschriebenen Nachteile der bekannten Methoden vermeidet.

Bei der hydrothermalen Behandlung liegt die gewünschte Flüssigphase, die eine unabhängige Schwefelphase in einer flüssigen Wasserphase enthält, vorzugsweise in einer Menge vor, die ausreicht, die Menge an porösem Kohlenstoff zu bedecken.

So wird eine gleichmäßige Beladung der gesamten Menge an porösem Kohlenstoff gewährleistet. Der Druck innerhalb des Druckbehälters stellt sich dabei in Abhängigkeit von der vorgegebenen Temperatur entsprechend dem Wasser-Partialdruck automatisch ein.

Im Hinblick darauf hat sich auch bewährt, wenn das Gewichtsverhältnis von wässrigem Medium und Feststoffphase in der Dispersion zwischen 0,5:1 und 3:1 liegt.

Der Feststoffanteil ergibt sich dabei aus dem porösen Kohlenstoff und dem Aktivmaterial. Bei einem Anteil des wässrigen Mediums höher als 3:1 kommt es zunehmend zu Entmischungserscheinungen. Bei einem Anteil des wässrigen Mediums von weniger als 0,5:1 verliert sich dessen benetzende und verflüssigende Wirkung, was ein homogenes Befüllen der Poren der Kohlenstoffstruktur erschwert.

Die Dauer der hydrothermalen Behandlung richtet sich nach dem gewünschten Grad der Beladung des porösen Kohlenstoffs mit dem Aktivmaterial und sie hängt von der Viskosität der Flüssigphase, der Füllmenge an Aktivmaterial und der Teilchengröße des Kohlenstoff-Pulvers ab. Typischerweise beträgt die Dauer der hydrothermalen Behandlung mindestens 180 min.

Theoretisch nimmt die Kapazität des Komposits mit dem Gewichtsanteil an Aktivmaterial zu, aber auch die dem Aktivmaterial verbundene Volumenänderung beim Entlade- und Ladevorgang, wie oben bereits erläutert. Die Kohlenstoffmatrix des Kompositpulvers dient zur Schaffung eines Gerüstes oder einer Umhüllung und zur Abpufferung von Volumenänderungen. Im Fall des erfindungsgemäßen Komposits hat sich ein Gewichtsanteil von 1 bis 90 %, vorzugsweise zwischen 50 und 80 % für das Aktivmaterial als günstig erwiesen.

Das Isolieren des Komposits nach Abschluss der hydrothermalen Behandlung umfasst bevorzugt einen Flotationsschritt.

Nach Abschluss der hydrothermalen Behandlung wird eine Dispersion erhalten, bei der etwaiger Restschwefel aufschwimmt und so durch Flotation abgezogen werden kann. Das vergleichsweise schwerere Komposit sinkt hingegen nach unten ab.

Bei einer besonders bevorzugten Verfahrensvariante umfasst das Bereitstellen des Kohlenstoff-Pulvers ein Templatverfahren, bei dem ein Kohlenstoffgerüst um ein strukturdirigierendes Templat aus porösem SiO₂-Soot aufgebaut und das Templatmaterial daraufhin entfernt wird.

Ein derartiges Templat-Verfahren zur Herstellung eines porösen Kohlenstofferzeugnisses für Elektroden von Sekundärbatterien ist an und für sich aus der DE 10 2010 005 954 A1 bekannt. Dabei wird durch Hydrolyse oder Pyrolyse einer siliziumhaltigen Ausgangsverbindung mittels eines Sootabscheideprozesses zunächst ein poröses SiO₂-Templ aus agglomerierten oder aggregierten SiO₂-Nanopartikeln erzeugt. Die Poren werden mit einer Kohlenstoff-Vorläufersubstanz infiltriert. Nach dem Kalzinieren wird das SiO₂-Templ durch Ätzen entfernt. Es wird ein poröses Kohlenstofferzeugnis mit hierarchischer Porenstruktur erhalten, das für die Durchführung des erfindungsgemäßen Verfahrens optimal geeignet ist.

Je feinteiliger die Templat-Partikel sind, umso schneller, effektiver und gleichmäßiger erfolgt die Infiltration mit Kohlenstoff bei ansonsten gleichen Prozessbedingungen. Die Templat-Partikel werden beispielsweise durch Aufmahlen poröser SiO₂-Sootkörpe oder durch Brechen von Schichten aus SiO₂-Soot, durch Pressen eines Pulvers aus SiO₂-Soot oder Granulationsverfahren hergestellt. Vorzugsweise wird das Templat in Form poröser SiO₂-Granulatteilchn mit nicht sphärischer Morphologie bereitgestellt, die erhalten werden, indem eine durch Gasphasenabscheidung erzeugte SiO₂-Sootschicht thermisch zu einer porösen Sootplatte verfestigt und danach zu den porösen Granulatteilchen zerkleinert wird.

Die durch Sootabscheidung erzeugte und thermisch verdichtete Sootplatte kann mit geringem Aufwand zerkleinert werden, wobei Granulatteilchen mit plättchenartiger oder flockenartigen Morphologie erhalten werden. Diese zeichnen sich somit durch eine nicht sphärische Morphologie aus, die besonders homogen und schnell mit Kohlenstoff infiltriert werden kann, denn die Granulatteilchen zeigen ein großes Verhältnis von Oberfläche zu Volumen, was die Infiltration mit einer flüssigen Substanz vereinfacht und vergleichmäßigt.

Bei einer bevorzugten Methode zum Aufbau des Kohlenstoffgerüsts wird eine Mischung aus Templat-Partikeln und aus Partikeln einer schmelzbaren Vorläufersubstanz für Kohlenstoff erhitzt, so dass Vorläufersubstanz-Schmelze in die Poren der Templat-Partikel eindringt und die Vorläufersubstanz vor dem Entfernen des Templatmaterials carbonisiert wird.

Dabei wird die Vorläufersubstanz für Kohlenstoff in Kontakt mit dem Templat erhitzt und dabei erweicht oder erschmolzen, so dass sie in die Poren des Templats eindringen kann. Auf ein Lösungsmittel für die Kohlenstoff-Vorläufersubstanz kann verzichtet werden. Diese "direkte Infiltration" des Templats mit verflüssigter Vorläufersubstanz gelingt am besten, wenn vorab erzeugte Pulver sowohl aus dem porösen Templatmaterial als auch von der Vorläufersubstanz bereitgestellt, diese Pulver homogen miteinander vermischt und die homogene Pulvermischung so weit erhitzt, dass die Partikel der Vorläufersubstanz schmelzen. Diese Schmelze kann in die benachbarten Templat-Partikel unmittelbar eindringen. Die homogene Pulvermischung gewährleistet, dass stets schmelzflüssige Vorläufersubstanz im innigen Kontakt mit den Templat-Partikeln steht, so dass sich eine gleichmäßige Verteilung und Belegung über das gesamte zu infiltrierende Poren-Volumen des Templatmaterials ergibt. Die hohe Temperatur beim Erschmelzen der Vorläufersubstanz trägt zur besseren Benetzbarkeit der Oberflächen des Templats bei, so dass sich ein auch bei nur einmaliger Infiltration bereits ein hoher Füllgrad des Porenvolumens einstellt. Nach dem Carbonisieren wird das anorganische Templatmaterial entfernt. Dieses dient lediglich als mechanisch und thermisch stabiles Gerüst zum Ablagern und Calzinieren der Kohlenstoff-Vorläufersubstanz.

Das Kohlenstofferzeugnis fällt bei den oben beschriebenen Templat-Herstellungsmethoden in der Regel als Monolith mit plättchen- oder flockenartiger Morphologie an. Das daraus erzeugte Kompositpulver liegt vorzugsweise in Form poröser Kohlenstoffflocken aus Kohlenstoffschichten mit einer mittleren Schichtdicke im Bereich von 10 µm bis 500 µm, vorzugsweise im Bereich von 20 µm bis 100 µm, besonders bevorzugt von weniger als 50 µm vor, die eine hierarchische Porenstruktur aufweisen.

Schichtdicken von weniger als 10 µm können zu einer geringen mechanischen Stabilität der Kohlenstoffflocken führen. Kohlenstoffflocken mit einer Dicke von mehr als 500 µm sind über ihre Dicke zunehmend inhomogener. Die hierarchische Porenstruktur stellt sich infolge der oben näher erläuterten Herstellung eines SiO₂-Soot-Templats durch Gasphasenabscheidung ein, und eignet sich besonders gut für die Herstellung der Elektroden aufladbarer Lithium-Schwefel-Batterien.

Die hydrothermale Behandlung bewirkt innerhalb der Poren der porösen Kohlenstoffstruktur eine deutlich stärkere Beladung mit Aktivmaterial als außerhalb der Poren. Nur der innerhalb der Poren gelagerte Anteil des Aktivmaterials unterliegt dem Rückhaltevermögen der Kohlenstoffstruktur. Der an der Außenwandung abgelagerte Anteil kann hingegen ohne weiteres vom Elektrolyten abtransportiert werden und ist dann für den elektrochemischen Prozess verloren. Dies gilt insbesondere für Polysulfide, die typischerweise in Elektrolyten löslich sind.

Daher ist vorzugsweise vorgesehen, dass der in Atom-% an der Oberfläche innerhalb der Poren des Kohlenstoffs gemessene Anteil des Aktivmaterial ist mindestens um den Faktor 1,5, vorzugsweise mindestens um den Faktor 3 höher als der an der Oberfläche außerhalb der Poren des Kohlenstoffs gemessene Anteil des Aktivmaterials.

Hinsichtlich des Kohlenstoff und Schwefel enthaltenden Komposits wird die oben angegebene Aufgabe ausgehend von einem Komposit der eingangs genannten Gattung erfindungsgemäß dadurch gelöst, dass der in Atom-% gemessene Anteil des Aktivmaterials in den Porenkanälen und den Innenwandungen um mindestens den Faktor 1,5 höher ist als der an der Außenoberfläche, und dass in den Porenkanälen und den Innenwandungen der mittels EDX-Analyse in Atom-% ermittelte Anteil des Aktivmaterials um mindestens den Faktor 1,5 höher ist als der mittels EDX-Analyse in Atom-% ermittelte Anteil an Kohlenstoff.

Der erfindungsgemäße Komposit wird beispielsweise anhand des erfindungsgemäßen Verfahrens erhalten. Wie im Zusammenhang mit diesem Verfahren erläutert, führt die hydrothermale Behandlung unter Anwesenheit einer Flüssigphase von wässrigem Medium und flüssigem Schwefel zu einer ausgeprägten und homogenen Beladung der Poren und Porenkanäle der porösen Kohlenstoffstruktur mit Schwefel. Die Beladungsmenge ist deutlich größer als sie mit bekannten Methoden erreichbar ist. Nur dadurch gelingt es überhaupt, an der Innenwandung von Poren und Porenkanälen eine Belegung mit Aktivmaterial, insbesondere mit Schwefel, zu erreichen, die bei Ermittlung mittels EDX-Analyse um mindestens den Faktor 1,5, vorzugsweise mindestens den Faktor 3 größer ist als der Anteil an Kohlenstoff (in Atom-%) und die gleichzeitig um mindestens den Faktor 1,5, vorzugsweise mindestens den Faktor 3 größer ist als der Anteil an Aktivmaterial an den Außenoberfläche.

Der an der Außenoberfläche der Kohlenstoffstruktur abgelagerte Anteil an Aktivmaterial kann ohne weiteres vom Elektrolyten abtransportiert werden und ist dann für den elektrochemischen Prozess verloren. Nur der innerhalb der Poren und der Porenkanäle gelagerte Anteil des Aktivmaterials unterliegt dem Rückhaltevermögen der Kohlenstoffstruktur.

### Ausführungsbeispiel

Nachfolgend wird die Erfindung anhand eines Ausführungsbeispiels und einer Zeichnung näher erläutert. Im Einzelnen zeigt
- **Figur 1**: eine Vorrichtung zur Herstellung von SiO₂-Granulatteilchen als Templatmaterial zur Herstellung von porösem Kohlenstoff in schematischer Darstellung,
- **Figur 2**: ein plättchenartiges SiO₂-Granulatteilchen in schematischer Darstellung,
- **Figuren 3 bis 6**: Stufen der Herstellung eines porösen Kohlenstofferzeugnisses in schematischer Darstellung,
- **Figur 7**: den Ausschnitt A des Kohlenstofferzeugnisses gemäß Figur 6 in vergrößerter Darstellung nach dem Beladen mit Aktivmaterial,
- **Figur 8**: eine rasterelektronenmikroskopische Aufnahme eines gemäß der Erfindung hergestellten Komposits aus Kohlenstoff und Schwefel,
- **Figur 9**: eine rasterelektronenmikroskopische Aufnahme eines durch SchmelzInfiltration hergestellten Komposits aus Kohlenstoff und Schwefel zum Vergleich,
- **Figur 10**: eine rasterelektronenmikroskopische Aufnahme eines erfindungsgemäßen Komposits im Anschnitt nach dem Absputtern mittels eines fokussierten lonenstrahls (Focused Ion Beam), und
- **Figur 11**: den in Figur 10 markierten Ausschnitt in stärkerer Vergrößerung zwecks Erläuterung des Messortes für eine EDX-Analyse

### Herstellung von Templatmaterial

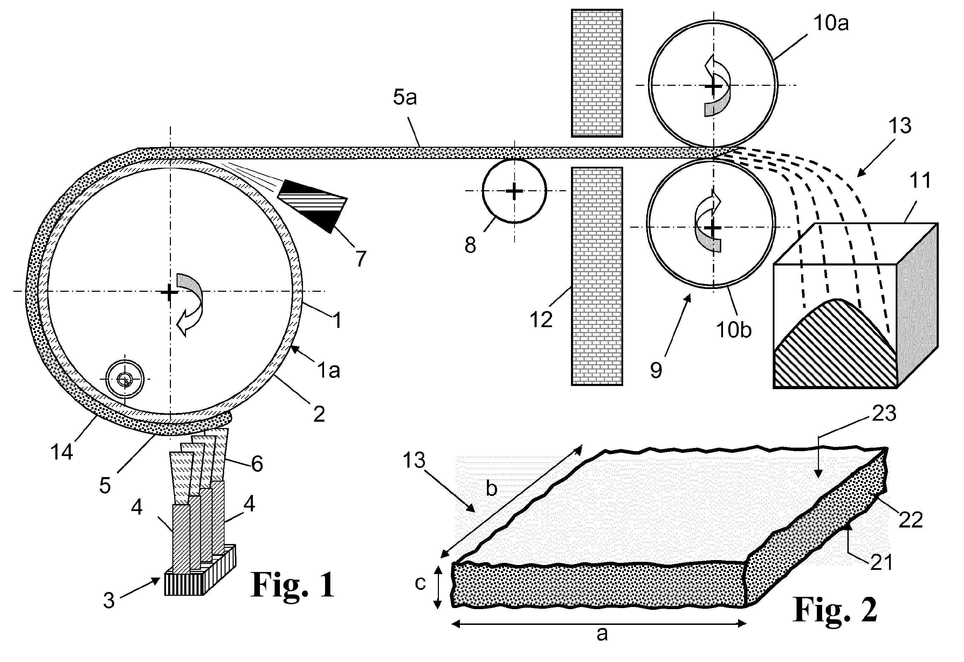

Die in **Figur 1** dargestellte Vorrichtung dient zur Herstellung poröser Granulatteilchen aus Si0₂, die beim erfindungsgemäßen Verfahren als Harttemplat zur Herstellung von porösem Kohlenstoff eingesetzt werden. Diese Vorrichtung und das Verfahren zur Harttemplat-Herstellung sind in der DE 10 2011 014 875 B3 erläutert.

Die Vorrichtung umfasst eine um ihre Rotationsachse 2 rotierbare Trommel 1, die aus einem Grundkörper aus Edelstahl besteht, der mit einer dünnen Schicht aus Siliciumcarbid belegt ist. Die Trommel 1 hat einen Außendurchmesser von 30 cm und eine Breite von 50 cm. Auf der Mantelfläche 1a der Trommel 1 wird eine Schicht 5 aus SiO₂-Soot abgeschieden und unmittelbar zu einer SiO₂-porösen Sootplatte 5a leicht thermisch verdichtet.

Für die Sootabscheidung werden Flammhydrolysebrenner 4 eingesetzt, von denen vier in einer gemeinsamen Brennerreihe 3 in Richtung der Trommel-Längsachse 2 hintereinander angeordnet sind. Die Brennerreihe 3 wird parallel zur Rotationsachse 2 zwischen zwei ortsfesten Wendepunkten hin- und her bewegt. Den Flammhydrolysebrennern 4 werden als Brenngase Sauerstoff und Wasserstoff sowie Octamethylcyclotetrasiloxan (OMCTS) als Einsatzmaterial für die Bildung von SiO₂-Partikeln zugeführt. Die Größe der dabei erzeugten SiO₂-Primärpartikel liegt im Nanometerbereich, wobei sich mehrere Primärpartikel in der Brennerflamme 6 zusammenlagern und in Form mehr oder weniger sphärischer Aggregate mit einer spezifischen Oberfläche nach BET im Bereich von 25 m²/g anfallen, die auf der Trommel-Mantelfläche 1 a eine durchgängige, gleichmäßig dicke SiO₂-Sootschicht 5 bilden.

Die Primärpartikel lagern sich auf ihrem Weg zur Ablagerungsfläche zu Nanoteilchen zusammen. Je nach Grad der Wechselwirkung mit der Reaktionszone auf ihrem Weg zur Ablagerungsfläche lagert sich eine unterschiedliche Anzahl von Primärpartikeln zusammen, so dass grundsätzlich eine breite Teilchengrößenverteilung der Nanoteilchen im Bereich von etwa 5 nm bis etwa 200 nm ergibt. Die Nanoteilchen sind über sogenannte Sinterhälse miteinander verbunden. Zwischen den einzelnen Nanoteilchen ergeben sich größere Hohlräume oder Poren, die in der Sootschicht und in Teilstücken derselben ein System miteinander verbundener Makroporen bilden. Eine gewisse thermische Verfestigung der Sootschicht ist erwünscht, so dass ein poröses, zusammenhängendes Gerüst gebildet wird, in dem sphärische Nanoteilchen zu größeren Einheiten aggregiert oder agglomeriert und über sogenannte "Sinterhälse" miteinander verbunden sind.

Die Rotationsgeschwindigkeit der Trommel 1 und die Abscheiderate der Flammhydrolysebrenner 4 sind so abgestimmt, dass sich eine SiO₂-Sootschic 5 mit einer Breite von etwa 40 cm und einer Dicke von etwa 45 µm ergibt (die Sootschicht ist in Figur 1 aus Darstellungsgründen übertrieben dick eingezeichnet). Die Brenner 4 bewirken gleichzeitig ein gewisses Vorsintern der Sootschicht 5 zu einer Sootplatte 5a, indem sie auf der Oberfläche der obersten Sootlage eine mittlere Temperatur von etwa 1200°C erzeugt. Unterstützt wird das Vorsintern von einem rohrförmigen Infrarotstrahler 14, der innerhalb der als Hohltrommel ausgebildeten Trommel 1 im linken unteren Quadranten angeordnet ist, und der die Mantelfläche der Trommel 1 kurz nach dem Aufbringen der Sootschicht 5 von der Innenseite aus erhitzt.

Die so erhaltene poröse, leicht vorgesinterte Sootplatte 5a hat eine mittlere relative Dichte von etwa 22 % (bezogen auf die Dichte von Quarzglas mit 2,21 g/m³).

Nach etwas mehr als einer halben Trommel-Umdrehung gelangt die Sootplatte 5a in den Einwirkungsbereich eines Gebläses 7, mittels dem ein gegen die Unterseite der Sootplatte 5a gerichteter Gasstrom erzeugt wird, so dass sich die Sootplatte 5a von der Trommel-Mantelfläche 1 a abhebt.

Die Sootplatte 5a wird anschließend über eine Stützrolle 8 einem Brechwerkzeug 9 zugeführt, das aus zwei gegensinnig rotierenden Rollen 10a, 10b besteht, zwischen denen ein Spalt mit der Dicke der Sootplatte 5a vorgesehen ist, und deren Oberflächen mit Längsprofilen versehen sind.

Die durch den Spalt hindurchlaufende Sootplatte 5a wird durch die Längsprofile der Rollen 10, 10a in ungefähr gleich große Bruchstücke (Granulatteilchen 13) zerteilt, die in einem Auffangbehälter 11 gesammelt werden.

Zwischen der Trommel 1 und dem Brechwerkzeug 9 ist eine Trennwand 12 vorgesehen, die mit einer Öffnung zur Durchführung der Sootplatte 5a versehen ist und die zur Abschirmung des Sootabscheideprozesses von den Auswirkungen des Zerkleinerungsprozesses dient.

Die nach dem Verfahren erhaltenen Granulatteilchen 13 haben eine plättchenartige oder flockenartige Morphologie und eine Dicke, die in etwa der Dicke der Sootplatte 5a entspricht, also etwa 45 µm. Infolge des beschriebenen Brechvorgangs sind auch die Granulatteilchen 13 in etwa gleich groß, so dass sich eine enge Korngrößenverteilung einstellt.

Für die Herstellung des erfindungsgemäßen Komposits wird ein derartiges poröses Templat mit Sootstruktur mit schwefelhaltigem Aktivmaterial beschichtet, wobei die inneren Oberflächen der Poren und Hohlräume mit dem Aktivmaterial belegt werden, so dass die im Templat vorgegebene Porenstruktur und Teilchenverteilung mehr oder weniger auf diese Beschichtung überführt wird.

**Figur 2** zeigt schematisch ein derartiges nicht sphärisches, plättchenartiges SiO₂-Granulatteilchen 13 gemäß der Erfindung. Das Granulatteilchen 13 hat eine mehr oder weniger plane Oberseite 23 und eine parallel dazu verlaufende Unterseite 21 sowie seitliche Bruchflächen 22, jeweils mit offenen Poren. Die Dickenabmessung ist mit "c" bezeichnet und die beiden seitlichen Abmessungen mit "a" und "b". Das Strukturverhältnis "A", also das Verhältnis von größter Strukturbreite (a) oder (b) und Dicke (c) der Granulatteilchen 13 beträgt im Ausführungsbeispiel etwa 10.

### Herstellung von porösem Kohlenstoff

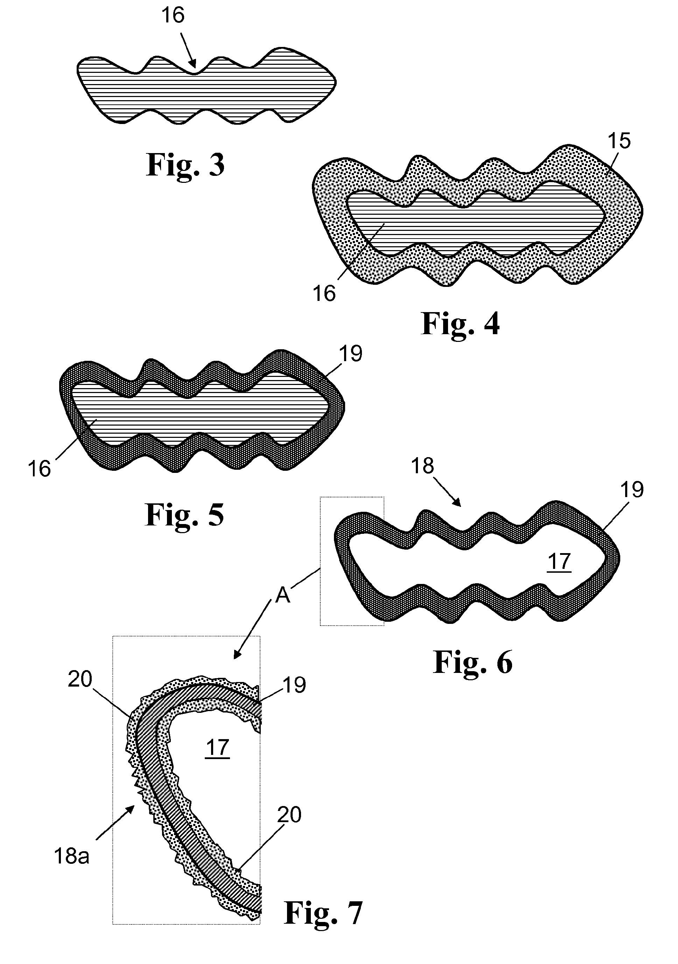

Die so erzeugten porösen Granulatteilchen dienen als Harttemplat für die Herstellung von porösem, flockenförmigem Kohlenstoffpulver, wie dies in **Figuren 3 bis 6** schematisch dargestellt ist und im Folgenden näher erläutert wird.

Die nicht sphärischen, plättchenförmigen Templat-Partikel 13 setzen sich mikroskopisch betrachtet aus einer Vielzahl sphärischer Aggregate aus SiO₂-Primärpartikeln zusammen, die miteinander verbunden sind und so ein "Soot-Gerüst" bilden. Ein einziges derartiges Primärpartikel-Aggregat 16 ist in **Figur 3** schematisch dargestellt, die also einen Ausschnitt aus einem "Soot-Gerüst" zeigt. Die Granulatteilchen 16 werden mit fein gemahlenem Pulver aus Mesophasenpech im Volumenverhältnis 1:1 (Pech : Granulatteilchen) mittels Mischer homogen miteinander vermischt. - Die Mischdauer beträgt etwa 5 min.

Die Partikelmischung wird anschließend auf eine Temperatur von 300°C erhitzt. Das niedrig viskose Pech umhüllt dabei die kleinen SiO₂-Primärpartikel-Aggregat 16 und dringt in die Poren ein und infiltriert diese. Das Volumenverhältnis von Pech und Primärpartikel-Aggregat ist dabei so gewählt, dass das Pech die Poren soweit füllt, dass nach einer Infiltrationsdauer von 30 min kaum noch ein nennenswertes freies Porenvolumen übrig bleibt.

**Figur 4** zeigt schematisch den so erhaltenen Verbund aus Primärpartikel-Aggregat 16, umhüllt von einer Pechschicht 15.

Nach der Infiltrationsdauer von 30 min wird die Temperatur auf 700 °C unter Stickstoff erhöht und das Pech der Kompositschicht zu Kohlenstoff reduziert (carbonisiert). Die ursprüngliche Pechschicht schrumpft dabei und bildet danach eine grafitähnliche Kohlenstoffschicht 19 mit etwas geringerer Dicke wie **Figur 5** schematisch zeigt.

Die Kohlenstoffschicht 19 hat eine geringe Porosität und sie ist im Mittel etwa 50 nm dick. In dem Zusammenhang ist anzumerken ist, dass die Darstellung der Figuren 3 bis 6 nicht maßstabsgetreu ist.

Nach dem Abkühlen wird eine leicht poröse Kompositmasse aus nicht sphärischen porösen Primärpartikel-Aggregaten 16, erhalten, die überall mit einer Lage aus graphitisierbarem Kohlenstoff belegt sind.

Das SiO₂ der Primärpartikel-Aggregate 16 wird anschließend entfernt, indem die Kompositmasse in ein Bad aus 2-molarer NaOH-Lösung eingebracht wird. Da die Templat-Partikel aus netzartig miteinander verbundenen Nanopartikeln bestehen, kann die NaOH-Lösung innerhalb der Netzstruktur vordringen bis das gesamte Templatmaterial entfernt ist.

**Figur 6** zeigt schematisch die nach dem Wegätzen des SiO₂-Primärpartike Aggregats 16 erhaltene poröse Kohlenstoffstruktur 18. Durch das Entfernen des Templatmaterials bildet das Volumen, das vorher von sphärischen Nanoteilchen und deren Aggregaten/Agglomeraten belegt war Kavitäten 17, die über Porenkanäle - das sind die ehemaligen Sinterhälse - miteinander verbunden sind.

Die Kohlenstoffstruktur 18 besteht aus einer dünnen, grafitähnlichen Kohlenstoffschicht 19, welche die Wandung einer Kavität 17 bildet, die ursprünglichen von einem SiO₂-Nanoteilchenagglomerat also von einem Primärpartikel-Aggregat 16 - besetzt war.

Die Kohlenstoffstruktur 18 erstreckt sich in allen Raumrichtungen und stellt näherungsweise ein negatives Abbild der Massenverteilung der ursprünglichen SiO₂-Primärpartikel-Aggregate 16 dar. Sie weist eine hierarchische Porenstruktur auf. Wichtig ist, dass die Kavität 17 nicht abgeschlossen, sondern mit anderen Meso- und Makroporen fluidisch verbunden ist. Sie stellt ein freies Porenvolumen sowie weitere Oberfläche zur Verfügung, über die ein an oder in der Kohlenstoffstruktur 18 fixiertes Aktivmaterial einem Elektrolyten zugänglich ist.

Die so erhaltene Kompositstruktur 18 wird bei Bedarf weiter zerkleinert. Es werden Kohlenstoffflocken erhalten, bei denen eine feingliedrig zerklüftete Oberfläche von größeren Hohlräumen kanalartig durchzogen ist.

Das Herstellungsverfahren ist Gegenstand der DE 10 2011 013 075 A1.

### Beladen der porösen Kohlenstoffstruktur mit Aktivmaterial

Die so erzeugten Kohlenstoffflocken aus porösem Kohlenstoff mit hierarchischer Porenstruktur eignen sich besonders gut für die Herstellung von Elektrodenschichten der Schwefelelektrode (Kathode) einer aufladbaren Lithium-Schwefel-Batterie. Hierzu werden die Kohlenstoffflocken anhand eines hydrothermalen Verfahrens mit Schwefel infiltriert.

Als Ausgangskomponenten werden eingesetzt:
(A) Poröse Kohlenstoffflocken mit seitlichen Abmessungen, die durch eine mittlere Dicke von 50 µm bei einem Strukturverhältnis von 5 gekennzeichnet sind. Diese haben eine Porosität, wie anhand Figur 6 erläutert.
(B) Pulver aus reinem Schwefel in rhomboedrischer Modifikation mit einer Teilchengröße von weniger als 200 µm.
(C) Deionisiertes Wasser mit einer Leitfähigkeit von weniger als 3 µS.

Diese Komponenten werden in folgender Rezeptur eingesetzt:

**Rezeptur 1:**

| | |
|---|---|
| Kohlenstoffflocken: | 200 g |
| Schwefelpulver | 160 g |
| Wasser | 150 g |

Diese beiden Feststoff-Komponenten (A) und (B) werden im trockenen Zustand miteinander vermischt und mit deionisiertem Wasser homogen dispergiert; der Feststoffgehalt der Dispersion beträgt 70 Gew.-%. Sie wird in einen teflonbeschichteten Autoklaven eingebracht und darin folgender Prozedur unterzogen:

**Prozedur 1:**

| | |
|---|---|
| Aufheizrate | 10 °C/min |
| Endtemperatur | 140 °C |
| Haltedauer | 360 min bei der Endtemperatur |

Die Endtemperatur der hydrothermalen Behandlung ist dabei so gewählt, dass sie zum Aufschmelzen des Schwefels ausreicht, jedoch unterhalb des kritischen Punktes von Wasser liegt. Es bildet sich eine Flüssigphase, die Schwefelschmelze und unterkritisches Wasser enthält und die Menge an Kohlenstoffflocken gerade überdeckt. Die Flüssigphase penetriert die Poren der Kohlenstoffflocken unter hohem Druck, so dass diese mit Schwefel beladen werden.

Unter den hydrothermalen Bedingungen wird die Löslichkeit von Schwefel in der wässrigen Phase erhöht und das Wasser entfaltet eine zusätzliche Wirkung als Netzmittel, indem es die Abstoßung zwischen der hydrophilen Kohlenstoffoberfläche und der hydrophoben Schwefelschmelze verringert. Die Gefahr von Verstopfungen der engen Porenkanäle, welche in der porösen Kohlenstoffstruktur angelegte größere Kavitäten (Poren) miteinander verbinden, wird so vermindert Die Ausgangsmenge an Schwefel ist so gewählt, dass dieser möglichst vollständig in den Poren der Kohlenstoffstruktur aufgenommen wird, so dass der Anteil an Restschwefel nach der hydrothermalen Behandlung möglichst gering ist.

In der nach Abschluss der hydrothermalen Behandlung resultierenden Dispersion wird der aufschwimmende Schwefel durch Flotation entfernt und der restliche Feststoffanteil, der die Kohlenstoff-Schwefel-Komposit enthält, wird abfiltriert.

Es wird ein Kompositpulver 18a aus porösem Kohlenstoff und Schwefel gewonnen, der in den Kavitäten 17 homogen und in großer Menge eingelagert ist, wie dies **Figur 7** schematisch zeigt. Die Wandungen der Kohlenstoffstruktur 19 sind zum großen Teil von einer Schicht 20 aus Schwefel bedeckt, auch die Innenwandungen der Kavitäten 17.

Dieser Grad an Bedeckung führt im Vergleich zu der aus dem Stand der Technik üblichen Schmelzinfiltration des Schwefels zu einer merklich homogeneren Verteilung des Schwefels in den Poren der Kompositpulver 18a.

Durch die Einlagerung des Schwefels in den Kavitäten 17 werden die bei der Entladung der Batterie gebildeten und freigesetzten Schwefelverbindungen physikalisch gebunden, wodurch verhindert wird, dass sie sich im Elektrolyten gleichmäßig verteilen und dadurch für die elektrochemische Reaktion nicht mehr zur Verfügung stehen.

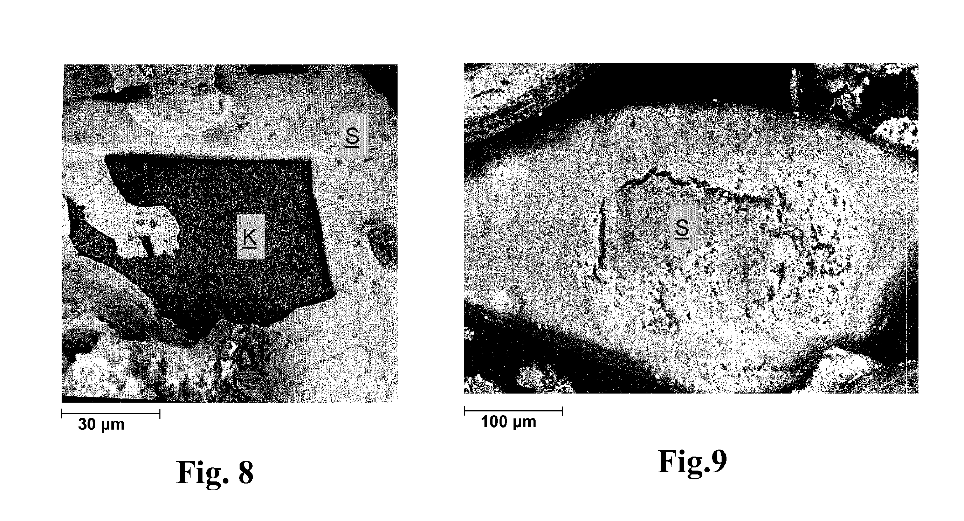

**Figur 8** zeigt eine rasterelektronenmikroskopische Aufnahme eines durch Schmelzinfiltration hergestellten Komposits aus Kohlenstoff und Schwefel. Flächen aus Kohlenstoff "K" sind an der dunkelgrauen oder schwarzen Färbung erkennbar. Flächen aus Schwefel "S" sind hell eingefärbt. Daraus ist unmittelbar ersichtlich, dass die Kohlenstoffbereiche und Schwefelbereiche streng voneinander separiert sind, und es nicht zu einer innigen Verbindung kommt. Ein großer Teil des Schwefels S ist auf der Außenseite des Kohlenstoffpartikels K abgeschieden wird und nicht in die Kavitäten infiltriert.

Im Vergleich dazu zeigt die rasterelektronenmikroskopische Aufnahme von **Figur 9** einen Ausschnitt eines gemäß der Erfindung hergestellten Komposits. Schwefel S ist in der Kohlenstoffmatrix homogen verteilt.

Die Abmessungen des Kompositpulvers entsprechen etwa denjenigen der Rohstoffkomponente (A). Zur weiteren Charakterisierung wurden lokale Elementkonzentrationen auf den Pulverteilchen mittels EDX-Analyse ermittelt. Zu diesem Zweck wurde eine dünne Oberflächenschicht eines Kompositpulver-Teilchens mittels fokussierten Ga-Ionenstrahls abgesputtert.

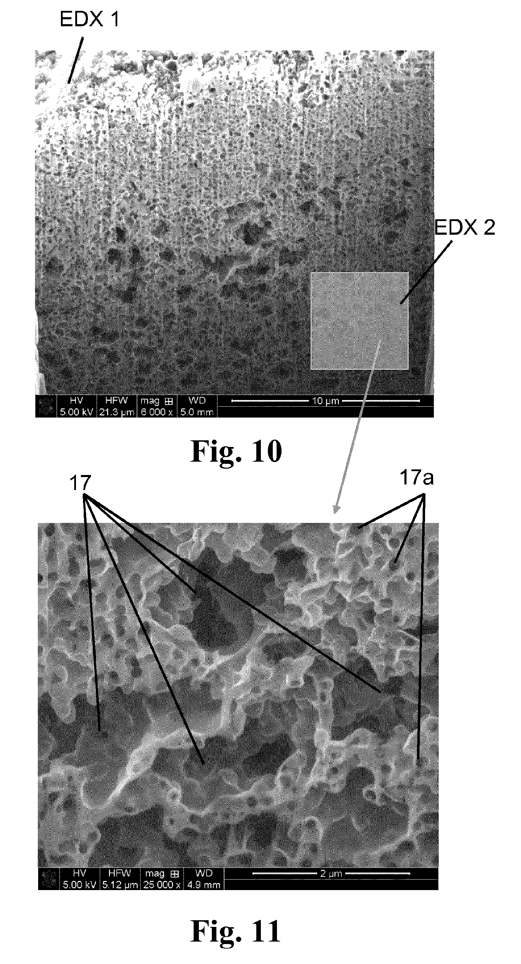

**Figur 10** zeigt den entsprechenden Anschnitt des Kompositpulver-Teilchens. Die ursprüngliche, nicht abgesputterte Oberfläche des Teilchens ist in der linken oberen Ecke der Abbildung als im Wesentlichen weißer Flächenbereich erkennbar. In diesem Flächenbereich wurde die EDX-Analyse EDX1 vorgenommen.

**Figur 11** zeigt den in Figur 10 markierten Bereich in stärkerer Vergrößerung. Daraus sind mehrere größere Kavitäten 17 und eine Vielzahl feiner Porenkanäle 17a zu erkennen. Figur 11 zeigt plastisch die Tortuosität der Kohlenstoffstruktur, die ein hohes Rückhaltevermögen für das Aktivmaterial bewirkt. In diesem Flächenbereich wurde die EDX-Analyse EDX2 vorgenommen.

Tabelle 1 zeigt das Ergebnis der EDX1-Analyse für die Außen-Oberfläche des Kompositteilchens:

**Tabelle 1**

| **Element** | **Gew.-%** | **Atom-%** |
|---|---|---|
| | | |
| **C** | 74.08 | 89.68 |
| **S** | 21.05 | 9.55 |
| **Ga** | 1.67 | 0.35 |
| **Ag** | 3.19 | 0.43 |
| | | |
| **Total** | 100.00 | 100.00 |

Tabelle 2 zeigt das Ergebnis der EDX2-Analyse für die Innenwandungen im Bereich der Kavitäten 17 und Porenkanäle 17a:

**Tabelle 2**

| **Element** | **Gew.-%** | **Atom-%** |
|---|---|---|
| | | |
| **C** | 22.76 | 45.07 |
| **S** | 71.35 | 52.93 |
| **Ga** | 5.89 | 2.01 |
| | | |
| | | |
| **Total** | 100.00 | 100.00 |

In den Tabellen 1 und 2 stehen:
- C: für den Anteil an Kohlenstoff,
- S: für den Anteil an Schwefel,
- Ga: für den Anteil an Gallium, der sich als Verunreinigung aufgrund des vorherigen Absputterns mit dem Ga-Ionenstrahl ergibt, und
- Ag: für den Anteil an Silber, das in der Leitpaste zum Fixieren des Kompositteilchens enthalten ist

Der Vergleich zeigt, dass der Schwefelgehalt im Bereich der Innenwandung des Kompositpulverteilchen um mehr als das 3-fache höher ist als auf deren Außenseite.

Aus Tabelle 2 ergibt sich darüber hinaus, dass an der Innenwandung der Kavitäten 17 und Porenkanäle 17a der Schwefelgehalt um mehr als das 3-fache höher ist als der Kohlenstoffgehalt, was auf eine fast vollständige und dichte Belegung der Kohlenstoffwandungen hindeutet.

## Patentansprüche

1. Verfahren für die Herstellung eines Komposits aus porösem Kohlenstoff und Schwefel-haltigem Aktivmaterial, umfassend folgende Verfahrensschritte:
(a) Bereitstellen von Pulver aus porösem Kohlenstoff,
(b) Herstellen einer Dispersion aus dem Kohlenstoff-Pulver, dem Schwefel-haltigen Aktivmaterial und einem wässrigen Medium,
(c) Hydrothermale Behandlung der Dispersion bei einer Temperatur, die zum Aufschmelzen von Schwefel ausreicht, unter Bildung einer Flüssigphase, die Schwefelschmelze und Wasser enthält, und Infiltrieren von Poren des porösen Kohlenstoffs mit der Flüssigphase,
(d) Entfernen des Wassers und Isolieren des Komposits.

2. Verfahren nach Anspruch 1, **dadurch gekennzeichnet, dass** die Flüssigphase, in eine Menge vorliegt, die ausreicht, die Menge an porösem Kohlenstoff vollständig zu bedecken.

3. Verfahren nach Anspruch 1 oder 2, **dadurch gekennzeichnet, dass** das Gewichtsverhältnis von wässrigem Medium und Feststoffphase in der Dispersion zwischen 0,5:1 und 3:1 liegt.

4. Verfahren nach einem der vorhergehenden Ansprüche, **dadurch gekennzeichnet, dass** die Dauer der hydrothermalen Behandlung mindestens 180 min beträgt

5. Verfahren nach einem der vorhergehenden Ansprüche, **dadurch gekennzeichnet, dass** auf das Schwefel-haltige Aktivmaterial im Kompositpulver ein Gewichtsanteil von 1 bis 90 %, vorzugsweise zwischen 50 und 80 % entfällt..

6. Verfahren nach einem der vorhergehenden Ansprüche, **dadurch gekennzeichnet, dass** das Entfernen des Wassers und Isolieren des Komposits einen Flotationsschritt umfasst.

7. Verfahren nach einem der vorhergehenden Ansprüche, **dadurch gekennzeichnet, dass** das Bereitstellen des Kohlenstoff-Pulvers ein Templatverfahren umfasst, bei dem ein Kohlenstoffgerüst um ein strukturdirigierendes Templat aus porösem SiO₂-Soot aufgebaut und das Templatmaterial daraufhin entfernt wird.

8. Verfahren nach Anspruch 7, **dadurch gekennzeichnet, dass** das Templat in Form poröser SiO₂-Granulatteilchen mit nicht sphärische Morphologie bereitgestellt wird, die erhalten werden, indem eine durch Gasphasenabscheidung erzeugte SiO₂-Sootschicht thermisch zu einer porösen Sootplatte verfestigt und danach zu den porösen Granulatteilchen zerkleinert wird.

9. Verfahren nach Anspruch 7 oder 8, **dadurch gekennzeichnet, dass** zum Aufbau des Kohlenstoffgerüsts eine Mischung aus Templat-Partikeln und aus Partikeln einer schmelzbaren Vorläufersubstanz für Kohlenstoff erhitzt wird, so dass Vorläufersubstanz-Schmelze in die Poren der Templat-Partikel eindringt und die Vorläufersubstanz vor dem Entfernen des Templatmaterials carbonisiert wird.

10. Verfahren nach einem der vorhergehenden Ansprüche, **dadurch gekennzeichnet, dass** Kompositpulver in Form poröser Kohlenstoffflocken aus Kohlenstoffschichten mit einer mittleren Schichtdicke im Bereich von 10 µm bis 500 µm, vorzugsweise im Bereich von 20 µm bis 100 µm, besonders bevorzugt von weniger als 50 µm, vorliegt und eine hierarchische Porenstruktur aufweist.

11. Verfahren nach einem der vorhergehenden Ansprüche, **dadurch gekennzeichnet, dass** der in Atom-% an der Oberfläche innerhalb der Poren des Kohlenstoffs gemessene Anteil des Aktivmaterial mindestens um den Faktor 1,5, vorzugsweise mindestens um den Faktor 3 höher ist als der an der Oberfläche außerhalb der Poren des Kohlenstoffs gemessene Anteil des Aktivmaterials.

12. Komposit aus porösem Kohlenstoff und Schwefel-haltigem Aktivmaterial, erhältlich nach einem Verfahren gemäß den Ansprüchen 1 bis 11, mit einer porösen Kohlenstoffstruktur, die eine Außenoberfläche und über Porenkanäle von der Außenoberfläche aus zugängliche und miteinander verbundene Kavitäten aufweist, die von Innenwandungen begrenzt sind, **dadurch gekennzeichnet, dass** der in Atom-% gemessene Anteil des Aktivmaterials in den Porenkanälen und den Innenwandungen um mindestens den Faktor 1,5 höher ist als der an der Außenoberfläche, und dass in den Porenkanälen und den Innenwandungen der mittels EDX-Analyse in Atom-% ermittelte Anteil des Aktivmaterials um mindestens den Faktor 1,5 höher ist als der mittels EDX-Analyse in Atom-% ermittelte Anteil an Kohlenstoff.

13. Komposit nach Anspruch 12, **dadurch gekennzeichnet, dass** der in Atom-% gemessene Anteil des Aktivmaterials in den Porenkanälen und den Innenwandungen um mindestens den Faktor 3 höher ist als der an der Außenoberfläche.

14. Komposit nach Anspruch 12 oder 13, **dadurch gekennzeichnet, dass** in den Porenkanälen und den Innenwandungen der mittels EDX-Analyse in Atom-% ermittelte Anteil des Aktivmaterials um mindestens den Faktor 3 höher ist als der mittels EDX-Analyse in Atom-% ermittelte Anteil an Kohlenstoff.

## Claims

1. A method for producing a composite consisting of porous carbon and sulfur-containing active material, said method comprising the following method steps:
(a) providing powder of porous carbon,
(b) preparing a dispersion of the carbon powder, the sulfur-containing active material and an aqueous medium,
(c) performing a hydrothermal treatment of the dispersion at a temperature sufficient for melting sulfur, so as to form of a liquid phase containing sulfur melt and water, and to cause infiltration of pores of the porous carbon with the liquid phase;
(d) removing the water and insulating the composite.

2. The method according to claim 1, **characterized in that** the liquid phase is present in an amount sufficient for fully covering the porous carbon.

3. The method according to claim 1 or 2, **characterized in that** the weight ratio of aqueous medium and solid phase in the dispersion is between 0.5:1 and 3:1.

4. The method according to any one of the preceding claims, **characterized in that** the duration of the hydrothermal treatment has a duration that is at least 180 min.

5. The method according to any one of the preceding claims, **characterized in that** the sulfur-containing active material in the composite powder makes up a weight percentage of 1-90%, preferably between 50% and 80%.

6. The method according to any one of the preceding claims, **characterized in that** the removal of the water and the insulation of the composite include a flotation step.

7. The method according to any one of the preceding claims, **characterized in that** the provision of the carbon powder comprises a template method in which a carbon skeleton is built up around a structure-directing template of porous SiO₂ soot template material and the template material is thereupon removed.

8. The method according to claim 7, **characterized in that** the template is provided in the form of porous SiO₂ granulate particles with non-spherical morphology, and wherein said porous SiO₂ granulate particles are obtained by producing a SiO₂ soot layer by gas phase deposition, thermally solidifying the SiO₂ soot layer into a porous soot plate and then comminuting said porous soot plate into the porous granulate particles.

9. The method according to claim 7 or 8, **characterized in that** for the buildup of the carbon skeleton a mixture of template particles and of particles of a meltable precursor substance for carbon is heated, so that precursor substance melt penetrates into the pores of the template particles and the precursor substance is carbonized prior to the removal of the template material.

10. The method according to any one of the preceding claims, **characterized in that** composite powder is present in the form of porous carbon flakes of carbon layers having a mean layer thickness ranging from 10 µm to 500 µm, preferably from 20 µm to 100 µm, particularly preferably of less than 50 µm, and has a hierarchical pore structure.

11. The method according to any one of the preceding claims, **characterized in that** the amount of the active material measured in at.% on the surface within the pores of the carbon is higher at least by the factor 1.5, preferably at least by the factor 3, than the amount of the active material measured on the surface outside the pores of the carbon.

12. A composite of porous carbon and sulfur-containing active material, obtainable by a method according to the claims 1 to 11, said composite comprising a porous carbon structure that has an outer surface and interconnected cavities which can be accessed via pore channels from the outer surface and which are defined by inner walls, **characterized in that** the active material is present in an amount measured in at.% in the pore channels and the inner walls that is higher by at least the factor 1.5 than an amount thereof on the outer surface, and wherein in the pore channels and the inner walls the active material is present in an amount determined by EDX analysis in at.% that is higher by at least the factor 1.5 than the amount of carbon therein determined by EDX analysis in at.%.

13. The composite according to claim 12, **characterized in that** the amount of the active material measured in at.% in the pore channels and the inner walls is higher by at least the factor 3 than the amount of the active material measured in at.% on the outer surface.

14. The composite according to claim 12 or 13, **characterized in that** in the pore channels and the inner walls the amount of the active material determined by means of EDX analysis in at.% is higher by at least the factor 3 than the amount of carbon determined by means of EDX analysis in at.%.

## Revendications

1. Procédé pour la fabrication d'un composite en carbone poreux et matériau actif sulfureux, comprenant les étapes suivantes de procédé
(a) préparation de la poudre de carbone poreux,
(b) production d'une dispersion en poudre de carbone, de matériau actif sulfureux et un milieu actif,
(c) traitement hydrothermique de la dispersion à une température suffisante pour la fusion du souffre en formant une phase liquide contenant le soufre fondue et de l'eau et infiltration des pores du carbone poreux par la phase liquide,
(d) retrait de l'eau et isolation du composite.

2. Procédé selon la revendication 1, **caractérisé en ce que** la phase liquide est en quantité suffisante pour couvrir entièrement la quantité de carbone poreux.

3. Procédé selon la revendication 1 ou 2, **caractérisé en ce que** le rapport pondéral entre le milieu aqueux et la phase solide dans la dispersion est compris entre 0,5:1 et 3:1

4. Procédé selon l'une des revendications précédentes, **caractérisé en ce que** la durée du traitement hydrothermique est d'au moins 180 min.

5. Procédé selon l'une des revendications précédentes, **caractérisé en ce qu'**une part pondérale en matériau actif sulfureux dans la poudre composite est comprise entre 1 et 90%, de préférence entre 50 et 80 %.

6. Procédé selon l'une des revendications précédentes, **caractérisé en ce que** le retrait de l'eau et l'isolation du composite comprennent une étape de flottation.

7. Procédé selon l'une des revendications précédentes, **caractérisé en ce que** la préparation de la poudre de carbone comprend un procédé modèle où est constitué un squelette de carbone autour d'un modèle en suie poreuse dirigeant la structure et le matériau modèle est ensuite enlevé.

8. Procédé selon la revendication 7, **caractérisé en ce que** le modèle est préparé sous forme de particules de granulé poreux en SiO₂ de morphologie non sphérique qui est obtenue en solidifiant une couche de suie SiO₂ générée par précipitation de phase gazeuse thermiquement en une plaque poreuse de suie qui est ensuite broyée en particules de granulé poreux.

9. Procédé selon la revendication 7 ou 8, **caractérisé en ce qu'**un mélange de particules modèles et de particules d'un précurseur fusible pour le carbone est chauffé pour la constitution du squelette carboné de sorte que le précurseur fondu pénètre dans les pores des particules modèles et le précurseur est carbonisé avant le retrait du matériau modèle.

10. Procédé selon l'une des revendications précédentes, **caractérisé en ce que** la poudre composite est sous forme de flocons de carbone poreux en couche de carbone d'épaisseur moyenne comprise entre 10 µm et 500 µm, de préférence entre 20 µm et 100 µm, et davantage inférieure 50 µm et présente une structure poreuse hiérarchique.

11. Procédé selon l'une des revendications précédentes, **caractérisé en ce que** la part du matériau actif mesurée en pourcentage atomique à la surface à l'intérieur des pores de carbone est supérieure au moins du facteur 1,5 de préférence au moins du facteur 3 à la part de matériau actif mesurée à la surface à l'extérieur des pores du carbone.

12. Composite en carbone poreux et matériau actif sulfureux obtenu selon un procédé conformément aux revendications 1 à 11, avec une structure de carbone poreux qui présente une surface externe et des cavités reliées entre elles et accessibles par la surface externe qui sont limitées par des parois internes, **caractérisé en ce que** la part mesurée en pourcentage atomique du matériau actif dans les canaux de pores et les cloisons internes est supérieure au moins du facteur 1,5 à la part déterminée en pourcentage atomique du matériau actif dans les canaux de pores et les cloisons internes au moyen de l'analyse EDX est supérieure au moins du facteur 1,5 la part en carbone en pourcentage atomique déterminée au moyen de l'analyse EDX.

13. Composite selon la revendication 12, **caractérisé en ce que** la part mesurée en pourcentage atomique du matériau actif dans les canaux de pores et les cloisons internes est supérieure au moins du facteur 3 à celle à la surface.

14. Composite selon la revendication 12 ou 13, **caractérisé en ce que** la part mesurée en pourcentage atomique du matériau actif dans les canaux de pores et les cloisons internes est supérieure au moins du facteur 3 à la part en carbone déterminée au moyen de l'analyse EDX.
